# EUROPEAN PATENT APPLICATION

(11) **EP 2 903 302 A1**
(43) Date of publication of application: **05.08.2015**
(21) Application number: 14305133.2
(22) Date of filing: 30.01.2014
(51) Int. Cl.: H04W 4/00

(54) **Method of managing a transaction between a secure element and a NFC terminal**

(71) Applicant: Gemalto SA, 92190 Meudon (FR)
(72) Inventor: Quiriconi, Jean-Rémi, 13705 La Ciotat (FR); Aillaud, Christophe, 13705 La Ciotat (FR); Capomaggio, Grégory, 13705 La Ciotat (FR)

(57) **Abstract**

The invention is a method of managing a transaction between a NFC terminal and a secure element embedded in a first device able to communicate using a contactless channel different from NFC. A second device is configured to communicate in both the contactless channel and a NFC channel. The method comprising the steps:
- in response to the receipt of a request sent by the NFC terminal, the NFC controller of the second device automatically sends the request to an application running in the second device,
- after detecting that the request is intended to be treated by the secure element, the application routes the request to the secure element through the contactless channel,
- the secure element computes a response to this request and sends the response to the application through the contactless channel,
- the application forwards the response to the NFC controller which sends the response to the NFC terminal.

## Description

### (Field of the invention)

The present invention relates to methods of managing a transaction between a secure element and a NFC (Near Field Communication) terminal. It relates particularly to methods of allowing to handle transactions between a NFC terminal and a secure element embedded in a device having the capability to communicate through a contactless channel different from NFC.

### (Background of the invention)

A secure element is a tamper-resistant device which is intended to be hosted in a machine like a mobile phone, a Machine-to-Machine (M2M) device, or any host machine requiring secure computing. A secure element may be removable like a Universal Integrated Circuit Card (UICC) or a secure memory card. A secure element may be welded to its hosting machine; such secure element is called embedded secure element. A secure element may contain an application intended to be called by the connected hosting machine or by a distant machine. A secure element may contain computing means (like cryptographic services) or a secure storage means intended to be used by the connected hosting machine.

Some transactions must be performed between a NFC terminal and a secure element which is embedded in a device having the ability to communicate through a contactless channel different from NFC. If this device has no means to establish a NFC communication (for instance, if the device has no NFC controller or has a deactivated NFC controller), there is a need to propose a new solution for allowing transaction between the NFC terminal and the secure element.

### (Summary of the Invention)

An object of the invention is to solve the above mentioned technical problem.

The object of the present invention is a method for managing a transaction between a secure element and a NFC terminal. The secure element is embedded in a first device which is able to communicate using a contactless channel different from NFC. A second device is configured to communicate using said contactless channel and comprises a NFC controller able to communicate with the NFC terminal via a NFC channel. The method comprising the following steps:
- in response to the receipt of a request sent by the NFC terminal, the NFC controller automatically sends the request to an application running in the second device,
- after detecting that the request is intended to be treated by the secure element, the application routes the request to the secure element through the contactless channel,
- the secure element computes a response to the request and sends the response to the application through the contactless channel, and
- the application forwards the response to the NFC controller which sends the response to the NFC terminal.

Advantageously, the first device may be pasted to the second device.

Advantageously, said first device may comprise a battery and a loader configured to charge the battery using energy provided by said second device in the form of an electromagnetic field.

Advantageously, the contactless channel may use the Bluetooth Low Energy.

Another object of the invention is a system comprising a NFC terminal, a first device and second device. A secure element is embedded in said first device which is able to communicate using a contactless channel different from NFC. The second device is configured to communicate using said contactless channel and comprises a NFC controller able to communicate with said NFC terminal via a NFC channel. The NFC controller is configured to automatically forward to an application running in the second device a request received from the NFC terminal in response to the receipt of said request. The application is configured to detect that the request is intended to be treated by the secure element and to route the request to the secure element through the contactless channel. The application is configured to retrieve a response computed by the secure element through the contactless channel and to forward the response to the NFC terminal via the NFC controller.

Advantageously, said first device may comprise a battery and a loader configured to charge the battery using energy provided by said second device in the form of an electromagnetic field.

Advantageously, said contactless channel may use the Bluetooth Low Energy.

Advantageously, the secure element may comprise a first secret data, the NFC terminal may comprise a second secret data and both the secure element and the NFC terminal may establish a secure session using said first and second secret data.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising a NFC terminal, a first device embedding a secure element and a second device comprising a NFC controller for managing a transaction according to the invention; and
- Figure 2 is an example of a flowchart for performing a transaction according to the invention.

### (Detailed description of the preferred embodiments)

The invention may apply to all kinds of device comprising a secure element and able to communicate using a contactless channel different from NFC. These devices are preferably portable devices and may be devices like stickers, watches, mobile phones, bracelets, glasses, key rings or Machine-To-Machine devices.

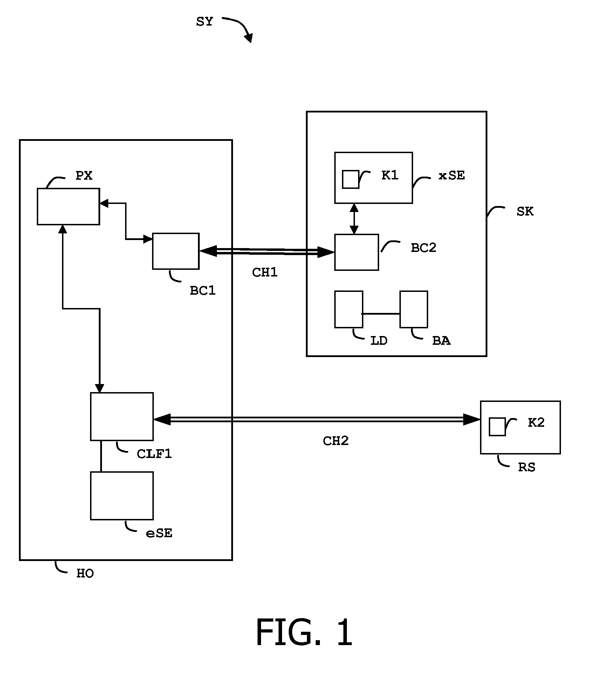

**Figure 1** shows schematically an example of a system SY comprising a NFC terminal RS, a first device SK embedding a secure element xSE and a second device HO comprising a NFC controller for managing a transaction according to the invention.

The device SK is a sticker comprising a contactless controller BC2 able to manage a wireless communication channel different from NFC. Preferably, the controller BC2 is compliant with the Bluetooth Low Energy ® (BLE) V4.0 specifications. The device SK comprises a secure element xSE and a battery BA. The battery BA provides the controller BC2 and the secure element xSE with the needed energy.

The device HO is a mobile phone comprising a contactless controller BC1 of the same type as the contactless controller BC2. The device HO comprises a NFC controller CLF1 also named "Contactless Frontend" which is able to communicate through NFC with a NFC-enabled device. The device HO comprises a secure element eSE directly connected to the NFC controller CLF1. The device HO comprises a software application PX which is configured to communicate with the NFC controller CLF1. In a preferred embodiment, the device HO has an operating system which is the Android KitKat ® V4.4 that allows taking advantage of the Host Card Emulation (HCE) ® mechanism. Thanks to the HCE, a software application installed into the mobile phone HO can has previously registered with the NFC control CLF1 as the unique target for a subset (or all) of the incoming NFC messages. Thus the software application PX can act as a physical secure element vis-à-vis the NFC controller CLF1. In other words, when a NFC channel is established between the NFC controller CLF1 and another NFC device, the NFC controller CLF1 triggers the software application PX instead of the secure element eSE. Thus the NFC controller CLF1 sends the data related to NFC communication to the software application PX. The software application PX is deemed to be an application of HCE type (also called a HCE application).

In this example, the transaction to be performed implies the sending of a request R1 from the reader RS to the secure element xSE and a corresponding response R2 in the other direction.

The NFC controller CLF1 is able to communicate with the NFC terminal RS via the NFC channel CH2. The NFC controller CLF1 is configured to automatically forward to the application PX a request R1 received from the NFC terminal RS in response to the receipt of this request R1.

The application PX is configured to detect that the request R1 is intended to be treated by the secure element xSE and to automatically route the request R1 to the secure element xSE through the contactless channel CH1 established between the controllers BC1 and BC2. In one embodiment, the application PX may be configured to route all requests initiated by the NFC terminal RS to the secure element xSE.

The application PX is configured to retrieve a response R2 computed by the secure element xSE through the contactless channel CH1 and to forward the response R2 to the NFC terminal RS via the NFC controller CLF1.

The device SK can be stuck on the device HO to form a united and single object from the point of view of the user.

The NFC terminal RS is a NFC reader dedicated to a service access. For instance, the NFC reader RS may be a payment machine or a control gate for accessing a place or a transport vehicle. The NFC terminal RS is able to handle transaction via NFC for its associated service.

In the example of Figure 1, the NFC terminal RS comprises a secret data K2 and the secure element xSE comprises a secret data K1. These secret data have specific value allowing the NFC terminal RS and the secure element xSE to guarantee confidentiality of the data they exchange. For instance, the NFC terminal RS and the secure element xSE can be configured to encipher and decipher the exchanged data using K1 and K2.

In one example, the device SK comprises a loader LD which is configured to charge the battery BA using energy provided by the device HO in the form of an electromagnetic field. Alternatively, the battery BA may be changed when empty. Advantageously, the sticker SK can be detached from the device HO and stick to another NFC device

It should be noted that the device HO may be devoid of onboard secure element (no eSE in device HO).

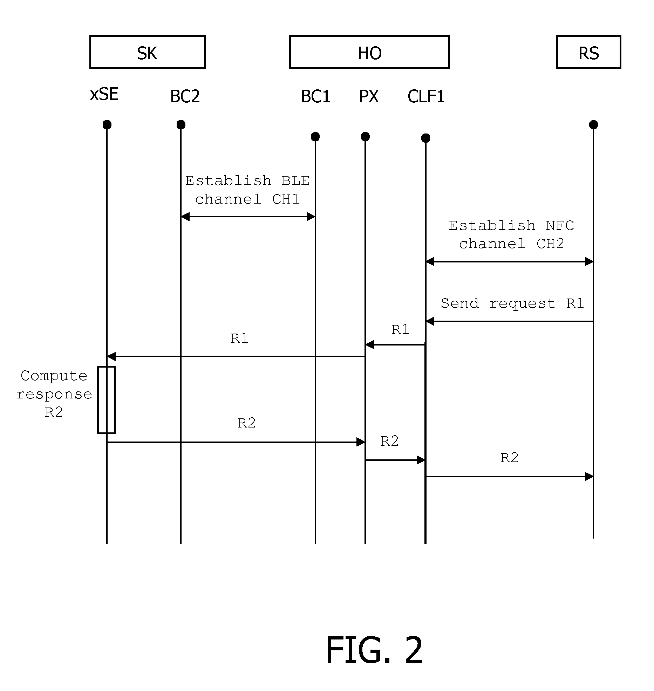

**Figure 2** shows an example of a flowchart for performing a transaction according to the invention.

In this example, we assume that the software application PX has previously registered with the NFC control CLF1 as the unique target for all incoming NFC messages. We also assume that the software application PX and the secure element xSE have been paired during a preliminary setting phase. This setting phase may be carried out through a discovery mechanism of the Bluetooth devices.

At a first step, a contactless channel CH1 is established between the controllers BC1 and BC2.

At a second step, the device HO is moved by the user and is located near the NFC terminal RS. The NFC channel CH2 is established between the NFC control CLF1 and the NFC terminal RS.

At a third step, the NFC terminal RS sends the request R1 to the NFC control CLF1.

At a fourth step, since the software application PX is registered with the NFC control CLF1, the NFC control CLF1 forwards the request R1 to the software application PX.

At a fifth step, the software application PX sends the request R1 to the secure element xSE via the wireless channel CH1.

At a sixth step, the secure element xSE compute a response R2 corresponding to the request R1 and sends this response R2 to the software application PX via the wireless channel CH1.

At a seventh step, the software application PX routes the response R2 to the NFC control CLF1 which in turn forwards the response R2 to the NFC terminal RS.

The transaction may comprise a plurality of request-response exchanges.

Advantageously, the NFC terminal RS and the secure element xSE can use their secret data K1 and K2 for ciphering and deciphering the request and the response. Thus a secure session is established between NFC terminal RS and the secure element xSE through both channels CH1 and CH2.

It should be noted that the invention does not cause disruption to existing NFC applications included in the secure element eSE embedded in the device HO. For example, the software application may register with the NFC control CLF1 as the unique target for a list of AID (Application Identifier) corresponding to as many NFC applications embedded in the secure element xSE. When the NFC control CLF1 receives a message targeting a NFC application having an AID which is not comprised in the list, it sends the message to the secure element eSE embedded in the device HO.

The invention also applies to a device HO paired with a plurality of external secure elements (of xSE type) embedded in one or several devices (of SK type).

It should be noted that the invention also applies to a device SK which also has the capability to communicate using a NFC channel. (in addition to the capability to communicate using a wireless channel different from NFC.)

An advantage of the invention is to require a light software update of legacy handsets for being deployed (no hardware change). Thus deployment of the invention is easy.

An advantage of the invention is to increase the security of the applications of HCE type by using an additional tamper-proof element (e.g. the secure element xSE).

An advantage of the invention is to provide a second factor of authentication (2FA) which increases the security level of the global solution by having an independent piece of hardware for performing the secure element role.

It must be understood, within the scope of the invention, that the above-described embodiments are provided as non-limitative examples. In particular, the number of request-response exchanges needed for completing a transaction may be greater than one. The NFC device HO may have any form factor like a bracelet, a pair of glasses, a belt, a keychain or a portable electronic device.

The invention is not limited to the embodiment of Android KitKat ® and HCE. It applies to all devices having an operating system configured to authorize a software application to register with a NFC controller for acting in place of a secure element.

## Claims

1. A method for managing a transaction between a secure element (xSE) and a NFC terminal (RS), the secure element (xSE) being embedded in a first device (SK) able to communicate using a contactless channel (CH1) different from NFC, a second device (HO) being configured to communicate using said contactless channel (CH1) and comprising a NFC controller (CLF) able to communicate with said NFC terminal (RS) via a NFC channel (CH2), the method comprising the step:
- in response to the receipt of a request (R1) sent by the NFC terminal (RS), the NFC controller (CLF1) automatically sends the request (R1) to an application (PX) running in the second device (HO), characterized and in that the method comprises the further steps:
- after detecting that the request (R1) is intended to be treated by the secure element (xSE), the application (PX) routes the request (R1) to the secure element (xSE) through the contactless channel (CH1),
- the secure element (xSE) computes a response (R2) to the request (R1) and sends the response (R2) to the application (PX) through the contactless channel (CH1),
- the application (PX) forwards the response (R2) to the NFC controller (CLF1) which sends the response (R2) to the NFC terminal (RS).

2. A method according to claim 1, wherein said first device (SK) is pasted to said second device (HO).

3. A method according to claim 1, wherein said first device (SK) comprises a battery (BA) and a loader (LD) configured to charge the battery (BA) using energy provided by said second device (HO) in the form of an electromagnetic field.

4. A method according to claim 1, wherein said contactless channel (CH1) uses the Bluetooth Low Energy.

5. A system (SY) comprising a NFC terminal (RS), a first device (SK) and second device (HO), a secure element (xSE) being embedded in said first device (SK) which is able to communicate using a contactless channel (CH1) different from NFC, said second device (HO) being configured to communicate using said contactless channel (CH1) and comprising a NFC controller (CLF1) able to communicate with said NFC terminal (RS) via a NFC channel (CH2), the NFC controller (CLF1) being configured to automatically forward to an application (PX) running in the second device (HO) a request (R1) received from the NFC terminal (RS) in response to the receipt of said request (R1),
**characterized in that** the application (PX) is configured to detect that the request (R1) is intended to be treated by the secure element (xSE) and to route the request (R1) to the secure element (xSE) through the contactless channel (CH1) and **in that** the application (PX) is configured to retrieve a response (R2) computed by the secure element (xSE) through the contactless channel (CH1) and to forward the response (R2) to the NFC terminal (RS) via the NFC controller (CLF1).

6. A system according to claim 5, wherein said first device (SK) is pasted to said second device (HO).

7. A system according to claim 5, wherein said first device (SK) comprises a battery (BA) and a loader (LD) configured to charge the battery (BA) using energy provided by said second device (HO) in the form of an electromagnetic field.

8. A system according to claim 5, wherein said contactless channel (CH1) uses the Bluetooth Low Energy.

9. A system according to claim 5, wherein the secure element (xSE) comprises a first secret data (K1), the NFC terminal (RS) comprises a second secret data (K2) and wherein said secure element (xSE) and NFC terminal (RS) establish a secure session using said first and second secret data (K1, K2).
